# EUROPEAN PATENT SPECIFICATION

(11) **EP 2 639 026 B1**
(45) Date of publication and mention of the grant of the patent: **29.07.2015**
(21) Application number: 13158770.1
(22) Date of filing: 12.03.2013
(51) Int. Cl.: B27L 7/00, A01G 23/00, A01G 23/083

(54) **Tree processing device**
Maschine zur Bearbeitung von Bäumen
Machine de façonnage d'arbres

(30) Priority: 13.03.2012 FI 20125269
(43) Date of publication of application: 18.09.2013
(73) Proprietor: Hytar Oy, 40320 Jyväskylä (FI)
(72) Inventor: Sirkka, Matti, 41290 KANGASHÄKKI (FI)
(74) Representative: Helke, Kimmo Kalervo

(56) References cited:
- EP-A1- 1 908 344
- AT-A4- 507 767
- FI-B- 102 596
- FI-C- 60 341
- FI-C- 96 393
- FR-A1- 2 529 821
- FR-A1- 2 630 677
- IT-A1- RE20 090 080
- SU-A1- 1 761 472
- US-A- 3 398 774
- US-A- 3 627 003
- US-A- 3 797 539
- US-A- 4 398 581

## Description

The present invention relates to a tree-processing device for making firewood, which includes,
- a frame,
- at least one grab, arranged to move over at least part of the length of the frame, for moving trees,
- a cutting device for cutting trees,
- a splitting device for splitting trees,
- support means for supporting the frame against the ground, and
- suspension means for suspending the tree-processing device from the boom of a work machine. Such a device in disclosed by EP 1908344 A.
A large number of different types of tree-processing devices exist for making firewood, i.e. so-called firewood processors, which are operated by the user. In these, there is a considerable variation in the amount of manual labour required. By means of a tree-processing device, a tree that has already been felled is cut into lengths and/or split into firewood of a set size. Finnish utility model FI 8168U is known from the prior art, which discloses a firewood processor supported on the ground, in which the splitting device is before the cutting device. However a drawback with tree-processing devices of this type is that working consecutively with different kinds of species of tree demands either moving the tree-processing device to another location, or sorting the species of tree in some other way into different stacks.

On the other hand, different types of harvester head are also known from the prior art, which fell the tree, strip it, split the tree into sections, and then cut the tree into firewood of a set size. However, these harvester heads have the drawbacks of a high purchase price, a heavy construction, and the fact that they require an expensive work machine to operate them, from which the harvester head is suspended. This makes it uneconomical to use harvester heads for making firewood.

Further known from the prior art is publication WO 2012/15671 A1, which discloses one tree-processing device to be suspended from the boom of a work device or set on the ground, by means of which a tree can be split and cut to form firewood billets. However, this tree-processing device has a very heavy construction. In addition, the use of a chain saw as the cutting device makes it difficult to centre the tree for splitting and leads to an unnecessary amount of sawdust.

The invention is intended to create a tree-processing device that is more versatile than the tree-processing devices of the prior art, with a construction that can be implemented in a lighter manner than solutions according to the prior art. The term versatile refers to the fact that the same tree-processing device can be used both suspended from the lifting boom of a work machine and independently supported on the ground. The features of the present invention are stated in the accompanying Claim 1.

This intention can be achieved by means of the tree-processing device according to the invention for making firewood, which includes a frame, at least one grab arranged to move over at least part of the length of the frame to move trees, a cutting device for cutting trees, and a splitting device for splitting trees. Further, the tree-processing device includes support means to support the frame on the ground and suspension means for suspending the tree-processing device from the lifting boom of a work machine. The cutting device is a double-bladed guillotine.

When using the double-bladed guillotine, the guillotine blades centre the tree automatically horizontally relative to the tree-splitting device. In addition, the double-bladed guillotine is faster to use than a single-bladed device. When using a guillotine, trees can be cut without forming sawdust. The tree-processing device according to the invention can be used both suspended from a work machine and independently as a firewood-processor on the ground. When using the tree-processing device suspended from a work machine, firewood can be made by rotating the tree-processing device on the lifting boom of the work machine freely between different stacks according to the species of tree, on top of a suitable billet pile for each species of tree being cut.

The guillotine includes two guillotine blades, which guillotine blades are arranged to move against each other perpendicularly to the longitudinal direction of the frame, until the guillotine blades partly overlap each other. The overlapping of the guillotine blades ensures cutting, nor can the tree escape from between the blades. Guillotine blades that move against each other require less power to perform cutting than a single blade, which must proceed for a long distance through the hard core of the tree. At the same time, there is a very much smaller force seeking to open the grabs acting on the grabs than in the case of a guillotine implemented with a single blade, as the guillotine's cutting is not directed against the grabs.

The guillotine blades are arranged to move against each other in a plane perpendicular to the longitudinal direction of the frame, which direction of movement is also perpendicular to the tree-processing device's direction of suspension. This further facilitates the alignment of the trees in the splitting device.

For operating the tree-processing device on the ground, the support means are preferably legs fitted detachably. Detachable legs will not interfere with the operation of the tree-processing device when it is suspended from the lifting boom of a work machine.

The tree-processing machine preferably includes at least two grabs, the first grab being fixed and the second grab moving. The grabs are arranged mutually to alternate between closed and open positions, in order to feed the tree to the cutting device and the splitting device. With the aid of the grabs, one grab can be used to grip a tree in a pile and, with the aid of the alternately closing grabs, to feed the tree in pulses to the cutting and splitting devices. As only one grab moves, the construction of other grab can be made considerably simpler than if both grabs moved.

The tree-processing device preferably includes debarking elements for breaking off the bark of the tree. With the aid of the debarking elements, the tree can be partly debarked, allowing it to dry more rapidly. In addition, the debarking elements facilitate the aligning of the tree in the splitting device.

The debarking elements can be planar pieces, which have two ends, the debarking elements being pivoted to the frame at one end and arranged at the other end to come into contact with the tree trunk in order to perform debarking. Such a construction prevents the tree from moving out from the direction of the cutting device and, at the same time, acts effectively to debark the tree.

The tree-processing device preferably includes a positioning system for the splitting device, arranged to adjust the positioning of the splitting device on the basis of the diameter of the tree. With the aid of the adjusting system, the splitting device can always be centred simply and surely relative to the diameter of the tree, without complicated sensors and control systems.

The positioning system preferably includes at least one positioning operating device for positioning the splitting device and a closed hydraulic circuit between the second grabs and the positioning operating device for positioning the splitting device on the basis of the position of the grabs. Thus, the positioning system can be implemented without separate sensor, in order to control the positioning operating device.

According to one embodiment, the closed hydraulic circuit of the positioning system further includes a hydraulic accumulator to permit a flexing movement of the splitting device during the operation of the cutting device. The hydraulic accumulator permits a small flexing of the splitting device, for example during the operation of the cutting device, so that the splitting device can move slightly along with the tree. Thus, the movement caused in the tree by the cutting device does not result in the splitting device twisting while the tree is being cut. This achieves greater durability of the splitting device, which can be made lighter.

The tree-processing device preferably includes a logic circuit for operating the tree-processing device's grabs, cutting device, and splitting device automatically and/or manually. Automatic operation considerably facilitates the task of the operator, while on the other hand manual operation gives greater functionality for the varying cutting and splitting operations arising from different types of tree.

The frame of the tree-processing device is preferably fixed and arranged to form a closed annular structure. The annular structure simplifies the construction of the tree-processing device and makes it economical to manufacture. In addition, the annular structure is rigid and sturdy, so that the frame can be lightened without reducing its stiffness.

According to a second embodiment, the second grab includes two eccentric arms, which are pivoted in connection with the frame by means of shafts perpendicular to both the splitting direction of the tree and the cutting direction of the cutting device. By means of sector-shaped arms, the work of the operating devices moving the carriage not only moves the carriage but is also converted into a movement of the grabs that grips the tree. This permits the tree-processing device to be implemented using fewer operating devices. In addition, the use of grabs of this kind achieves a non-slip grip on the tree.

The eccentric arms are preferably in the shape of the sector of a circle. Thus, with their aid a movement compressing the other grab too is usefully created.

The tree-processing device preferably includes a compressed-medium system, which includes a compressed-medium source, a double-acting operating cylinder, which includes a feed line and a return line, and a directional-control valve for controlling the operating cylinder. Further, the compressed-medium system includes compressed-medium conductors connected from the compressed-medium source through the directional-control valve to the operating cylinder and back again, a pressure-booster cylinder, which is fitted between the directional-control valve and the operating cylinder, a control element fitted between the directional-control valve and the pressure-booster cylinder for leading the compressed medium to the pressure-booster cylinder and from there to the operating cylinder, in order to increase the power of the operating cylinder. In addition, the compressed-medium system includes a rapid-feed valve, which is arranged between the directional-control valve and the operating cylinder, in order to circulate the compressed medium from the return line of the operating cylinder to the feed line, in order to increase the operating speed of the operating cylinder, in such a way that, together with the control element and the pressure-booster cylinder, three velocity and power zones are created in the compressed-medium system.

By using the aforementioned compressed-medium system, i.e. the so-called booster cylinder, the operation of the tree-processing device can be accelerated and, at the same time, the construction of the tree-processing device can be lightened considerably. With the aid of the booster cylinder, the force required for cutting and splitting can be achieved with the aid of considerably smaller operating devices, so that the construction of the tree-processing device can be made light. This in turn permits the use of the tree-processing device also when suspended from small and front loaders, as well as from light agricultural machines, such as, for example, the rear of a tractor.

According to one embodiment, the tree-processing device includes a directional-control valve for operating the compressed-medium system, both for moving the grabs on the frame when splitting the tree and for operating the cutting device. Because the movement of the grabs, i.e. the feed of the tree to the cutting and splitting devices, takes place alternately with the operation of the cutting device, the same booster cylinder can be utilized for both purposes, simultaneously reducing the size of the operating devices required for both the movement of the grabs and the operation of the cutting device.

According to another embodiment, the tree-processing device includes a priority valve for directing the pressure to alternately the operation of the second grabs and of the cutting device. Because the cutting and splitting of the tree take place alternately, pressure is also fed to these devices alternately.

The tree-processing device can include at least one operating device, which is arranged both to move the second grab on the frame and for a compressive movement taking place against the tree. Thus, it is possible to reduce the number of operating devices required in the tree-processing device and to increase the efficiency of the splitting.

The tree-processing device according to the invention has a low total weight and can be used with relatively light loaders, a front loader, or similar work machines. The detachable support means and the suspension means permit the tree-processing device according to the invention to be used either independently supported or suspended from the lifting boom of a work machine. With the aid of the splitting device that can be adjusted according to the position of the grabs, trees can be advantageously split irrespective of the diameter of the tree. Further, the tree-processing device according to the invention can be automatic, in which case the tree-processing device will take care of the tree feed, cutting, and splitting without separate control by the operator.

By means of the tree-processing device according to the invention, the cutting and splitting of trees can be performed straight from the tree stack. Using the tree-processing device, a tree can be gripped in a stack and moved to the location where it is desired to chop it. Chopping can be performed in such a way that the trees are sorted at the same time. By means of the tree-processing device according to the invention, a single lifting can handle an individual tree or several smaller trees simultaneously. Thanks to the use of a booster cylinder, the tree-processing device according to the invention is rapid in operation, and, if required, additional power can be obtained with the aid of the booster cylinder.

In the tree-processing device according to the invention, the use of a double-bladed guillotine as the cutting device permits the tree to be easily positioned relative to the splitting device. The double-bladed guillotine is quick to use, requires less force than a single-bladed guillotine, and acts effectively on trees that are stressed due to splitting. In addition, the use of a guillotine avoids creating sawdust when cutting a tree.

In the following, the invention is described in detail with reference to the accompanying drawings depicting some embodiments of the invention, in which
- Figure 1: shows an axonometric side view of a first embodiment of the tree-processing device according to the invention, without a shield,
- Figure 2: shows a more detailed axonometric side view of the construction of the first embodiment of the tree-processing device, without a shield,
- Figure 3: shows an axonometric front view of the of the first embodiment of the tree-processing device according to the invention, with a shield,
- Figure 4: shows an axonometric front view of the first embodiment of the tree-processing device according to the invention, with a shield and together with a tree,
- Figure 5: shows a hydraulic diagram of the first embodiment of the tree-processing device according to the invention,
- Figure 6: shows a hydraulic diagram of one pressure-medium system,
- Figures 7a - 7b: show schematic diagrams of the operation of one embodiment of the cutting device,
- Figure 8: shows an axonometric view of a tree-processing device according to a second embodiment,
- Figure 9: shows a bottom view of the tree-processing device according to the second embodiment,
- Figure 10: shows the hydraulic diagram of the second embodiment of the tree-processing device according to the invention.

The reference numbers of the figures refer to the following:

| | | | |
|---|---|---|---|
| 10 | tree-processing device | 48 | upper transverse beam |
| 12 | frame | 50 | carriage |
| 13 | first grab | 52 | operating device of first grab |
| 14 | grab | | |
| 15 | compressed-medium system | 54 | operating device of second grab |
| 16 | cutting device | | |
| 17 | second grab | 56 | throat |
| 18 | splitting device | 58 | operating device of cutting device |
| 20 | support means | | |
| 22 | suspension means | 62 | conductors |
| 24 | pressure line | 63 | frame |
| 25 | tank line | 64 | locking means |
| 26 | work-machine lifting boom | 65 | splitting grid |
| | | 66 | electrical power centre |
| 27 | detachable legs | 68 | slot |
| 28 | positioning operating device | 72 | grab plate |
| | | 74 | additional grab |
| 29 | high-pressure part | 75 | widening part |
| 30 | booster-cylinder feed line | 76 | shield |
| | | 78 | grab plate |
| 32 | low-pressure part | 80 | guillotine blade |
| 34 | low-pressure-side return line | 82 | guillotine |
| | | 84 | copy cylinder |
| 35 | pressure-controlled non-return valve | 86 | vertical plate |
| | | 88 | hydraulic accumulator |
| 42 | vertical plate | 90 | closed hydraulic circuit |
| 44 | vertical plate | 92 | control unit |
| 46 | lower transverse beam | 93 | directional control |
| | valve | 120 | turnbuckle |
| 94 | directional control valve | 122 | second grab eccentric arm |
| 95 | valve varying under pressure | 123 | carriage adjustment openings |
| 96 | operating device | 124 | shaft |
| 100 | tree | 125 | debarking element operating device |
| 101 | billet | | |
| 102 | pressure medium source | 126 | planar piece |
| 104 | operating cylinder | 127 | suspension adjustment |
| 106 | feed line | | openings |
| 107 | return line | 128 | first end |
| 108 | directional control valve | 129 | second end |
| | | 130 | shaft |
| 109 | pressure-medium conductors | 131 | rotation arm |
| | | 132 | grip plate |
| 110 | rapid-motion valve | 133 | extension |
| 112 | booster cylinder | 134 | bottom plate |
| 114 | sequence valve | 136 | priority valve |
| 116 | control element | 140 | pivot |
| 119 | debarking elements | | |

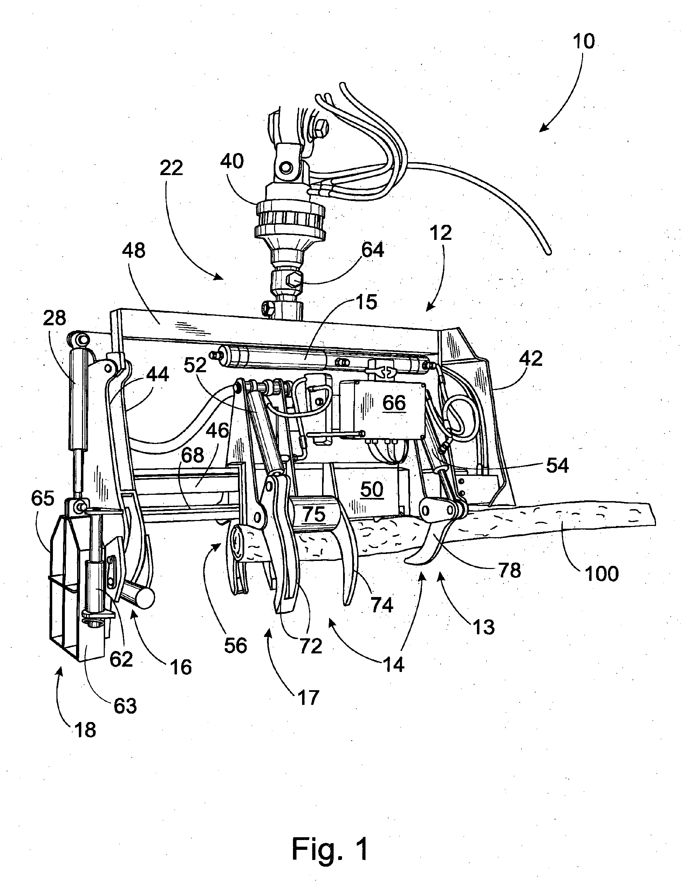

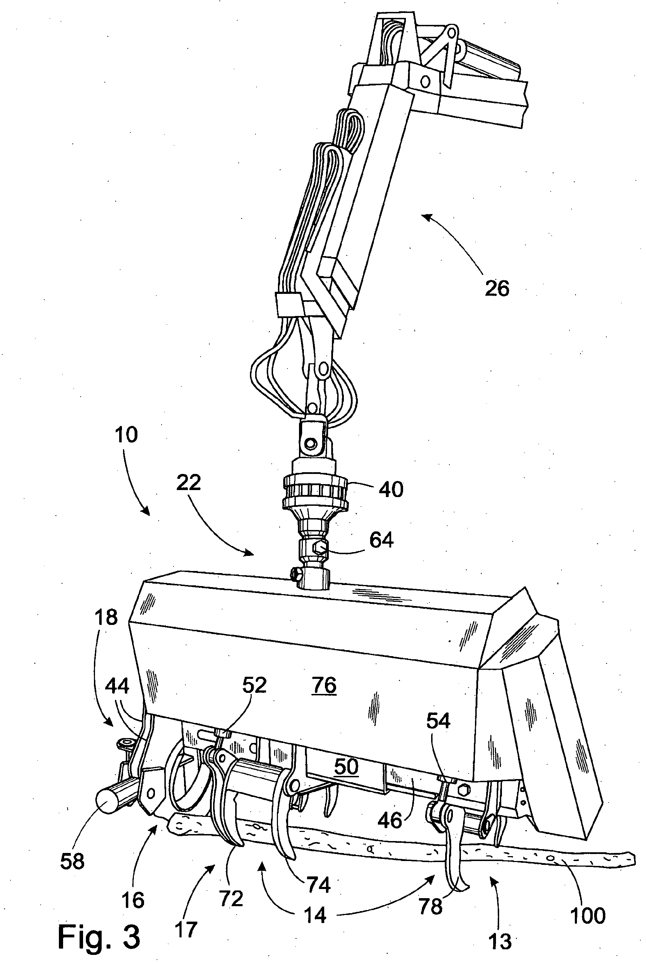

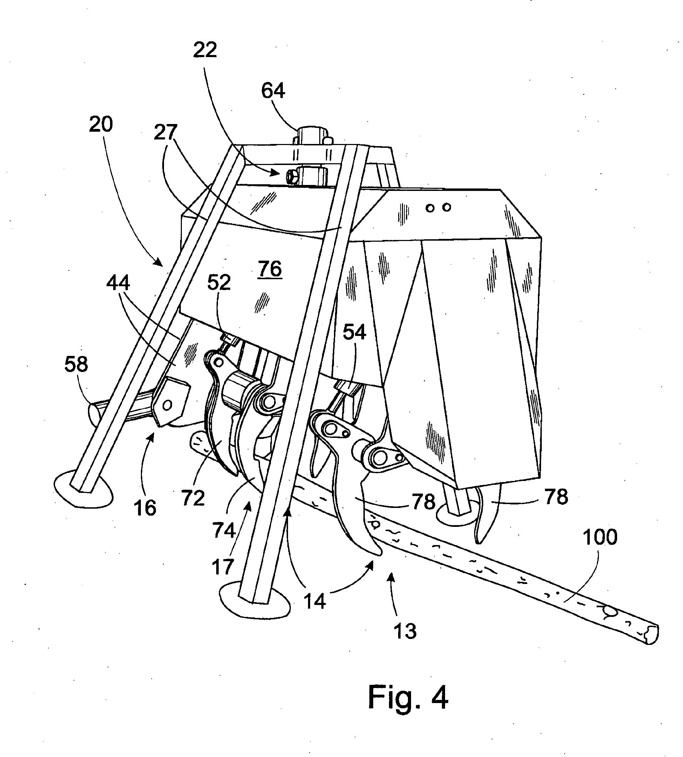

Figures 1 - 4 show the tree-processing device according to the invention. The figures show a first embodiment of the tree-processing device. According to the figures, the tree-processing device 10 includes a frame 12, at least one grab 14 arranged to move on the frame 12 in order to move trees 100, a cutting device 16, a splitting device 18, and support means 20 (Figure 4) for supporting the frame 12 on the ground. In addition to this, the tree-processing device 10 includes suspension means 22 for suspending the tree-processing device 10 from the lifting boom 26 (Figure 3) of a work machine. In this connection, the term lifting boom refers more generally to the lifting devices of work machines. In this embodiment, there are two grabs 14, i.e. a first grab 13 and a second grab 17.

According to the invention, the tree-processing device can be used either suspended from the lifting boom of a work machine or supported on the ground with the aid of support means. The suspension means can be, for example, similar to suspension means known from harvesters. When the tree-processing device is suspended from the lifting boom of a work machine, it can be used to pick one or more trees, for example, straight from a stack or the ground, to split the tree and cut it into billets. When suspended, the tree-processing device can at the same time be used for sorting, i.e. a desired stack can be made according to the species of tree by moving the tree-processing device on top of each stack when chopping a tree. Deviating from the figures, the tree-processing device can also be manufactured to be such that it includes attitude means, i.e. a tilting device for moving the tree-processing device into a vertical attitude.

When the tree-processing device is supported on the ground with the aid of support means, it can be used without a work machine. The trees must then be fed into the reach of the grab. The tree-processing device can be supported on the ground, for example with the aid of a separate base, or preferably with the aid of detachable legs. Supported on the ground, the tree-processing device can be used without a work machine. In the legs, there is preferably the possibility of adjustment for adjusting the attitude of the tree-processing device. Wheels can also be used in connection with the legs.

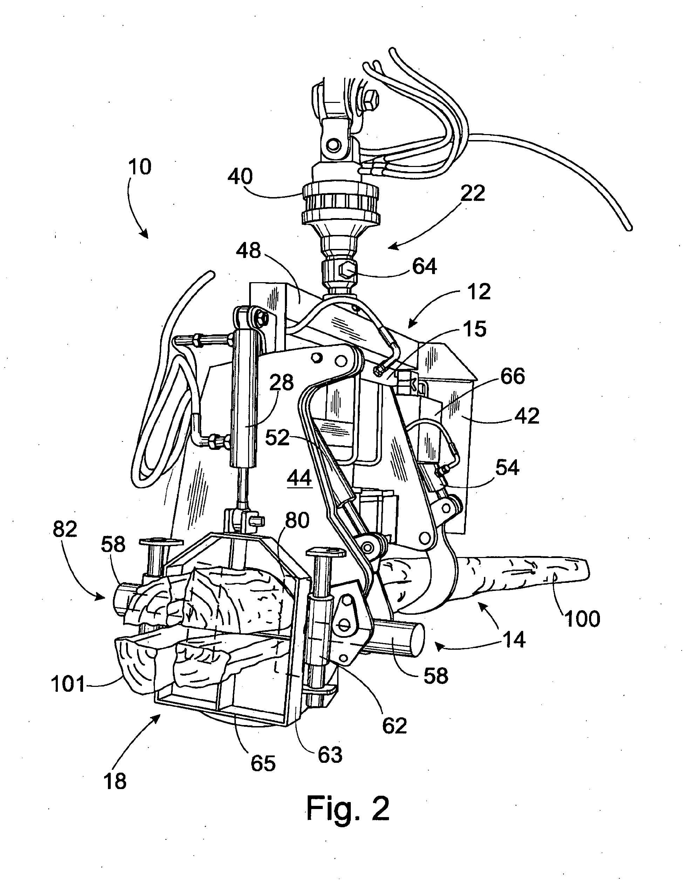

According to Figure 2, the tree-processing device's 10 frame 12 preferably consists of an upper transverse beam 48, a lower transverse beam 46, and vertical plates 42 and 44. Together these form a closed annular structure. Such a structure is sufficiently rigid and thus the structure of the aforementioned components can lighter than the open or pivoted tree-processing devices according to the prior art. The lower transverse beam 46 of the frame 12 acts as a guide for the carriage 50 that is supported to slide on it, and to which the second grab 17 is pivoted. The lower transverse beam can be surfaced with, for example, plastic slip surfaces. The first grab 13 is, for its part, pivoted permanently to the vertical plate 42.

In the tree-processing device according to the first embodiment, the grab 14 is intended to grip a tree 100 and feed it to the cutting device 16 and the splitting device 18. The first grab 13 is intended to grip the tree 100 and hold the tree 100 against the lower transverse beam 46 of the frame 12. The second grab 17 are intended to not only grip the tree 100, when the tree is picked from the stack, but also to move the tree 100 towards the cutting device 16 and the splitting device 18. In practice, both grabs 14 grip the tree, after which the first grab 13 remains in a closed position holding the tree 100 in the throat 56 formed by the grabs 14 and the frame 12. The second grab 17 also grips the tree 100 and at the same time moves along the lower transverse beam 46 of the frame 12 with the aid of the carriage 50. Thus, the tree 100 is moved towards the closed opening in the vertical plate 44 and the cutting device 16 moving between the vertical plates. With the aid of the closed opening, a good rigidity is achieved in the vertical plates 44. When the second grab 17 is again moved away from the cutting device 16, the tree 100 remains in place with one end in the opening in the vertical plate 44 and, on the other hand, is compressed or supported by the first grab 13.

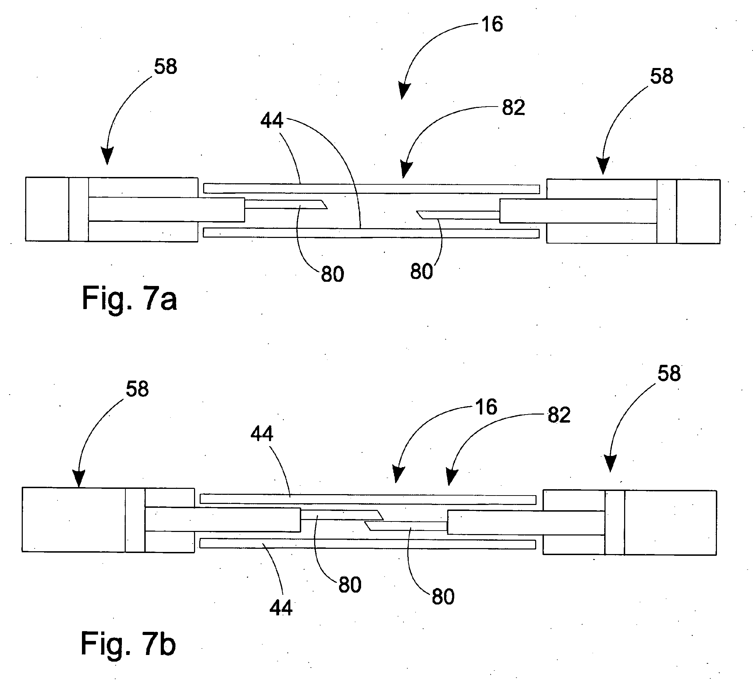

In the tree-processing device according to the invention, the cutting device 16 is a guillotine 82, in which there are two guillotine blades 80 (shown in Figures 2), i.e. a so-called double-bladed guillotine. The guillotine blades 80 move in a plane that is transverse relative to the longitudinal direction of the tree 100 and, and the same time, also transverse to the suspension direction of the tree-processing device 10. In other words, the guillotine blades 80 are moved horizontally towards each other according to Figure 7a, until they partly overlap each other according to Figure 7b. Alternatively, the guillotine blades can also be moved vertically, in which case the operating devices will not increase the overall width of the tree-processing device and will be better protected from impacts. Thus, the guillotine blades 80 cut the tree 100 precisely and at the same time centre the tree relative to the splitting device 18. The guillotine 82 includes at least one horizontal operating device and guillotine blades 80. Alternatively, the guillotine can be implemented with the aid of one longer cylinder operating device and draw bars. In ) connection with the present application, references to an operating device preferably refer to a hydraulic cylinder. The guillotine blades 80 are located between the vertical plates 44, which prevent the guillotine blades 80 from bending to the sides and support and guide the guillotine blades 80.

There is preferably one hydraulic cylinder for each guillotine blade. Thus the stroke of each cylinder can be in the order of 150 - 200 mm. Alternatively, there is one larger cylinder and draw bars in the guillotine, with the aid of which the motion of the cylinder is also transmitted to the second guillotine blade. In that case, the cylinder stroke will be 250 - 300 mm. The guillotine blades can be freely centring relative to each other. The guillotine can also be implemented with the aid of one hydraulic cylinder and guides. The guillotine can include quick clamps, with the aid of which the position of the guillotine blades are adjusted according to the wear in the guillotine blades.

According to Figure 1, the splitting device 18 is located after the cutting device 16. In practice, splitting takes place first of all by pushing the tree 100 towards a splitting grid 65 with the aid of the second grab 17. Once the tree 100 has been split, the cutting device 16 cuts the split part of the tree 100, in which case the billets fall to the ground or onto a conveyor. For example, a splitting grid 65 depicted in the figures can be used as the splitting device 18, in which the plates are welded into the shape of a grid and sharpened on the sides facing the tree 100. The grid is attached from its sides to a frame 63. The frame 63 is, in turn, preferably attached to vertically moving guides 62, by means of which it can be moved vertically. By means of the vertical movement, the splitting grid 65 can be set to the correct height, so that the splitting grid 65 will be aligned with the centre of the tree, debark the tree, or be at the side of the tree, depending on the diameter of the tree. Trees with a diameter greater than 70 mm, are generally split in the middle into two parts and trees with a diameter of 100 - 200 mm are, for their part, split into four parts. For positioning the splitting device 18, the tree-processing device 10 preferably includes a vertical positioning system, by means of which the splitting device is moved vertically in the guides 62.

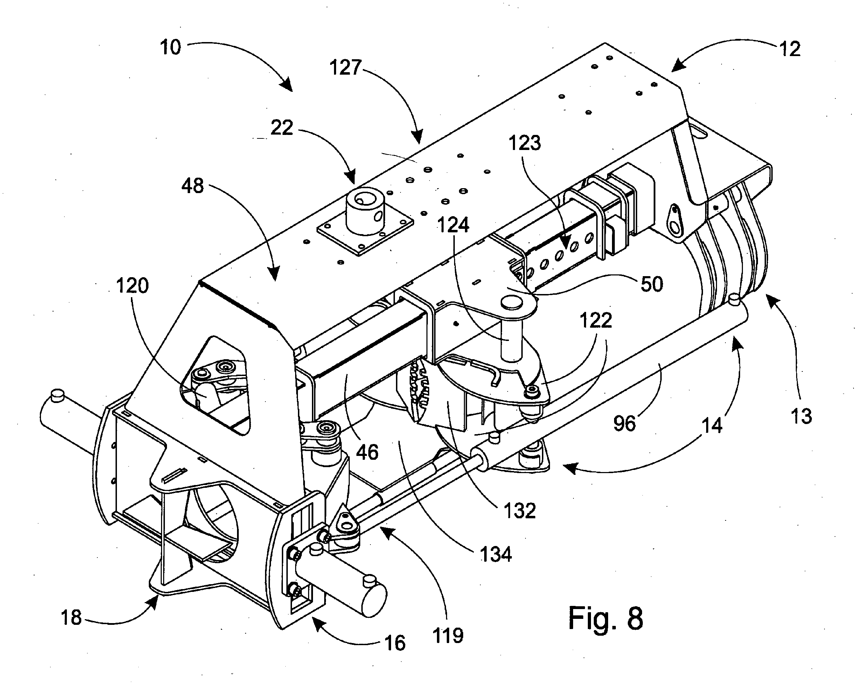

The length of the billet to be split can be set on the basis of the length of the horizontal movement of the second grab. In other words, the length of the stroke of the horizontal operating device moving the second grab, with the aid of the carriage, determines the length of the billet to be cut. If after cutting the second grab is reversed away from the cutting device by, for example, 300 mm, the length of the billet being cut will then become 300 mm. The length of the reversing can be limited, for example by using a movement stop. Alternatively, the tree-processing device can, according to the second embodiment of Figure 8, include adjustment openings 123 for the carriage, by means of which the length of the reversing can be adjusted. For its part, the length of the billet can be extended by splitting the tree for example over two moving lengths of the operating device, for example 300 mm, at a time and then performing cutting. The length of the billet will then become 600 mm.

The splitting device can include different interchangeable grids, in which component the plates can be, for example, in the shape of a star. In the grid there can also be more closely spaced plates in both the vertical and horizontal directions, so that the splitting grid will split or debark several thin trees at one time.

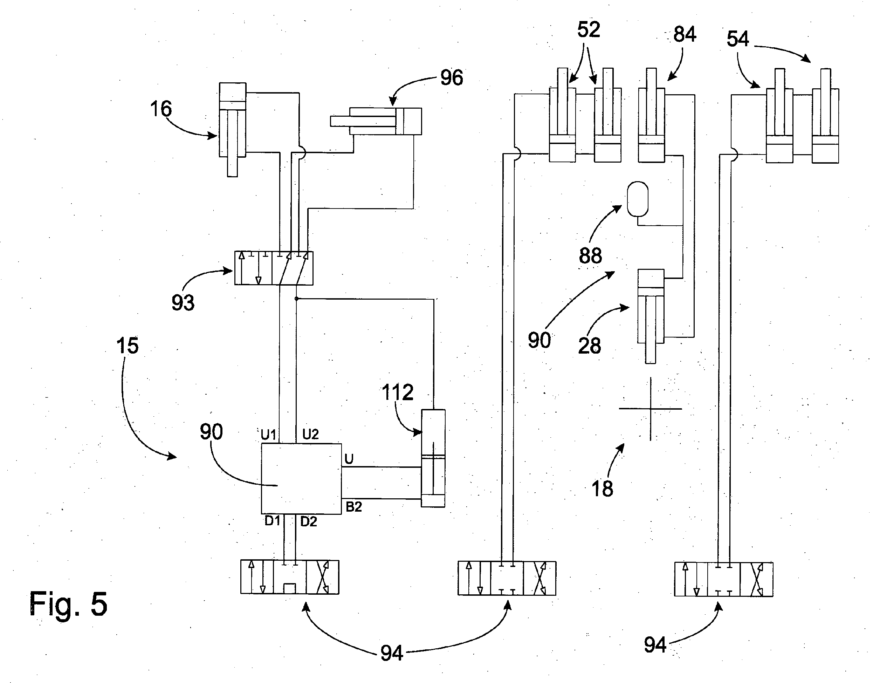

To position the splitting device, the tree-processing device can include a positioning system, which includes a positioning operating device 28 and a copy cylinder 84 combined in a closed hydraulic circuit 90 (shown in Figure 5). The copy cylinder 84 is installed in the second grab 17, in which case the position of the second grab 17 determines the protrusion of the piston rod of the copy cylinder 84. When the thickness of the tree changes, the second grab 17 closes in different positions when the tree is in the throat 56, in which case the copy cylinder 84 based on the attitude, transfers hydraulic oil to the positioning operating device i.e. positioning cylinder 28. In other words, the positioning device follows the movement of the second grab, so that when a thinner tree is in the second grab the positioning device moves the splitting device higher and in the case of a thicker tree lower. The closed circuit preferably includes a hydraulic accumulator 88 (shown in Figure 5), which permits the splitting device to 'flex' when the cutting device is being used. This prevents the splitting device being twisted when the cutting device is used, if the tree is twisted. At the same time, the splitting device gives way, which assists the billets to separate from each other. The positioning system can also be implemented without using a copy cylinder by using, for example, position sensors to control the positioning cylinder. The positioning system can also include a possibility for manual control. Alternatively, the positioning system can also use the movement of the guillotine blades of the guillotine, in which case the guillotine blades are only opened by an amount suiting the diameter of the tree. In this case, the drive of the guillotine blades obtained through the copy cylinder.

According to Figure 2, each grab 14 can have its own dedicated operating device 52 and 54. The grab's individual jaws on each side of the tree preferably have their own operating device. The operating devices 52 and 54 are preferably hydraulic cylinders, which at one end are pivoted to the vertical plates 86 between the transverse beams 48 and 46 of the frame 12 and, at the other end, to extensions of the individual jaws. The grabs 14 can be pieces cut from a sheet like the first grab 17. However, preferably grabs 14 are formed from two parallel grab plate 72 as well as the second grab 17. Such a construction is stronger and stiffer relative to the longitudinal forces of the tree. The second grab can also include a widening part 75, to the end of which additional grabs 74 are attached. By means of the additional grabs 74, it is possible to improve the grip of the second grab 14 on the tree and, at the same time, to guide the tree towards the cutting device.

The carriage 50 can move along the transverse beam 46 of the frame 12 with the aid of an operating device 96 (shown in Figure 5). In this embodiment, the operating device can be located inside the lower transverse beam 46, for which purpose there is a slot 68 in the transverse beam. The slot 68 permits the horizontal movement of the attachment pin between the operating device and the carriage inside the lower transverse beam 46, when the carriage 50 moves. The operating device is preferably a hydraulic cylinder. Alternatively, there can also be two operating devices and they can be located outside the transverse beam. In that case, the operation of the second grab can be arranged to follow the position of the carriage on the transverse beam of the frame. This means that there can be eccentrics for closing and opening the second grab, which press the second grab closed according to the movement of the carriage closer to the cutting device. When the carriage moves farther from the cutting device, the second grab opens. Eccentrics of this kind are shown in the second embodiment according to Figures 8 - 10.

Figures 3 and 4 show the tree-processing device according to the invention together with shields 76. The shields cover the operating devices of the grabs 14, and prevent objects from becoming wedged between them. The shields 76 are essential from the point of view of work safety. The shields can be shaped, for example, from sheet metal, plastic, or composite. In addition to the shields, the tree-processing device can include a mesh guard, which prevents objects from entering the tree-processing device.

Figure 4 shows the operation of the tree-processing device when it is supported on the ground. In this embodiment, the support means 20 are attached to the suspension means 22. The support means 20 can consist, for example, of three detachably attached legs 27, by means of which the tree-processing device is supported on the ground. The advantage of such a construction is its low lifting height. The detachable legs 27 can be attached, for example, with the aid of a separate connector piece in the rotator's place. Alternatively, the legs can also be shaped in such a way that the tree-processing device is turned upside down for independent operation. There should then, however, be opening in the shield, through which rubbish falling from the wood being cut and split can escape from inside the shield. The tree-processing device can include lifting lugs, with the aid of which the tree-processing device is supported until the legs have been attached.

When operating the tree-processing device independently without a work machine, a feed belt and lifting conveyor, for example, can be used as accessories with the tree-processing device. The operator then lifts the trees onto the feed belt, which transports the trees to within the reach of the tree-processing device's grabs. For its part, the lifting conveyor transports the chips falling from the splitting device directly to storage cages or sacks or similar.

For independent operation the operating power of the tree-processing device can be supplied, for example, from a pump driven with the aid of a generator, a tractor, or similar. In Figures 1 - 4, hydraulic hoses are not shown, but they can be implemented using solutions known from the prior art. Preferably only two hydraulic hoses and one electric cable are connected to the tree-processing device. To control the tree-processing device, the tree-processing device can include a moveable electric control unit, by means of which the direction-control valves are controlled. The control unit can be located, for example in the cab of the work machine, if the tree-processing device is used on the boom of a work machine. On the other hand, the control unit can also be located in connection with the tree-processing device, if the tree-processing device is used independently.

The tree-processing device preferably includes a logic unit, into which the functions of the tree-processing device can be programmed. In this way the tree-processing device can operate automatically. The operator then only gives a command to perform chopping by pressing a button, when the tree-processing device grips a tree and splits and cuts it. Alternatively to the logic, the tree-processing device can be controlled entirely manually. Also alternatively, the tree-processing device can be semi-automatic and implemented without electricity. In that case, the tree-processing device operates controlled by pressure.

Figure 5 shows the hydraulic diagram of the tree-processing device according to the invention. According to the figure, the tree-processing device can include four separate hydraulic circuits, three of which are controlled with the aid of a direction-control valve 94. The fourth hydraulic circuit, which belongs to the splitting device's positioning cylinder 28, can be implemented without a direction-control valve, as it is controlled directly from the control of the second grab, with the aid of the duplicate cylinder 84.

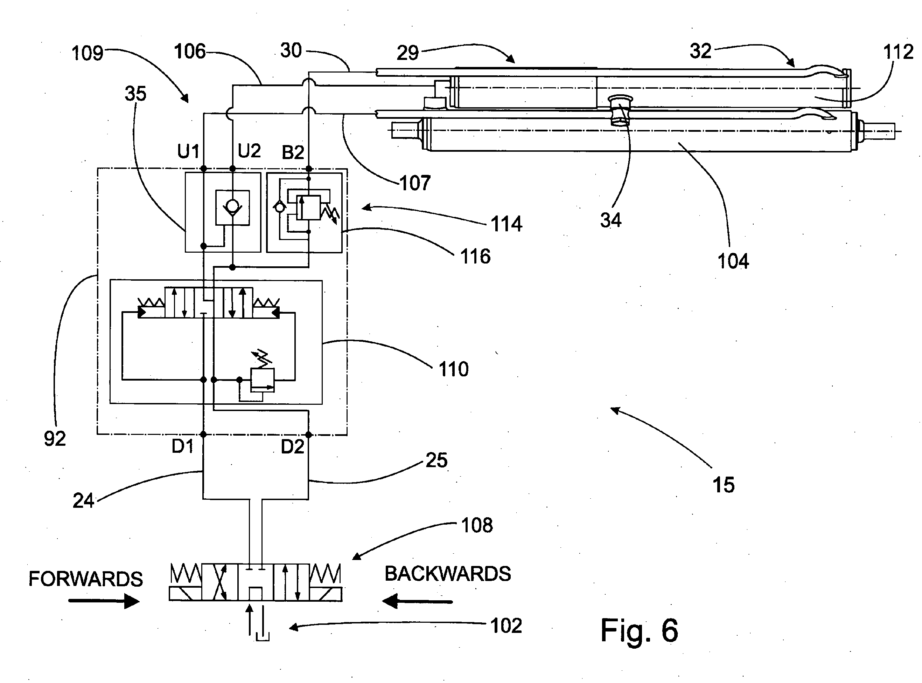

Both the cutting device 16 and the operating device 96 moving the carriage of the second grab are operated, in the first embodiment of the tree-processing device according to the invention, in the same hydraulic circuit. The movement of the cutting device and the movement of the carriage alternate with each other, so that the tree is pushed forward only when the cutting device is in place. The movement of the carriage is, at the same time, also the movement that pushes the tree through the splitting device. The movements of both the cutting device and the carriage demand a great deal of force, due to which in this hydraulic circuit a compressed-medium system 15 can be used, which includes a control unit 92 and a booster cylinder 112. The operation and construction of the compressed-medium system are described in greater detail in connection with Figure 6.

The tree-processing device according to the invention preferably also includes a compressed-medium system, i.e. a so-called booster cylinder. Figure 6 shows the construction and especially the circuit diagram of the compressed-medium system 15 in greater detail. The compressed-medium system 15 includes first of all a compressed-medium source 102, which can be, for example, the hydraulic take-off of a work machine, such as a tractor (not shown). In Figure 6, the compressed-medium source 102 is shown by an arrow, next to which is a symbol depicting the compressed-medium tank. The compressed-medium system 15 includes, in addition, a double-acting operating cylinder 104 equipped with a feed line 106 and return line 107 as well as a directional- control valve 108, for controlling the operating cylinder 104. In this connection, the term operating cylinder refers to the cylinder of the cutting device or the cylinder intended to move the carriage of the second grab. In this case, the directional-control valve is of a type that is normally closed. In order to control the operating cylinder the state of the directional-control valve must then be altered (for example manually).

To circulate the compressed medium, the compressed-medium system 15 includes compressed-medium conductors 109, which are connected from the compressed-medium source 102 through a directional-control valve 108 to the operating cylinder 104 and back. The pressure of the compressed-medium source can then be used to pressurize the operating cylinder and to direct it forwards and backwards. In the embodiment shown, a rapid-feed valve 110 is, in addition, arranged between the directional-control valve 108 and the operating cylinder 104. By means of the rapid-feed valve 110, the compressed medium is recirculated from the return line 107 of the operating cylinder 104 to feed line 106, in order to increase the operating speed of the operating cylinder 104. In practice, the rapid-feed valve 110 connects the piston and piston-rod sides of the operating cylinder to each other in a movement going forward in the operating-pressure range, without affecting the return movement of the operating cylinder. Thus, the forward movement of the operating cylinder accelerates in proportion to the surface areas of the piston and piston rods. In other words, in the uncontrolled central position of the rapid-feed valve the return line and feed line of the operating cylinder are connected to each other. In the embodiment described, the use of the rapid-feed valve doubles the speed of the work movement in the operating-pressure range. The rapid-feed valve is preferably a valve that opens automatically at a certain pressure, such as that in Figure 6, or a mechanical manually-operated valve (not shown). Control logic can also be used to operate the rapid-feed valve.

The compressed-medium system 15 further includes a pressure-booster cylinder 112, which is fitted between the rapid-feed valve 110 and the feed line 106 of the operating cylinder 104.

By means of the booster cylinder, the maximum pressure of the compressed-medium source can be raised, so that the operating cylinder will receive an even higher pressure. At the same time, the available power will increase. In addition, the system includes a pressure-controlled control element 116, i.e. a sequence valve 114 fitted between the rapid-feed valve 110 and the booster cylinder 112. The pressure-controlled sequence valve 114 is connected to the booster cylinder 112 in such a way that when the pressure in the feed line 106 of the operating cylinder 104 rises above the setting value of the pressure-controlled sequence valve 114, it changes position and feeds the compressed medium to the booster cylinder 112 and from there to the operating cylinder 104, in order to increase the operating force. The sequence valve is also called as priority valve or follow valve. The counter-pressure-compensated sequence valve allows the pressure medium to go behind the booster-cylinder piston, if the force of the operating cylinder threatens to end. The system can also be controlled manually or, for example using control logic, which uses, for example electrical or pneumatic operating elements. The construction and operation of the booster cylinder can be similar to those described in patent application FI 20095655.

Many advantages are gained by means of the pressure-medium system described above. The pressure-medium system is particularly advantageous in applications that mostly require a rapid work movement, but require high force only momentarily. By combining an operating cylinder and a booster cylinder it is possible to replace a large and slow operating cylinder or two parallel operating cylinders with a system that is twice as fast but still achieves the same force. In addition, the system is compact and control is both versatile and easily automated and adjusted.

A second embodiment of the tree-processing device according to the invention is shown in Figures 8 - 10. Figure 8 shows an axonometric view of the tree-processing device according to the second embodiment. The basic construction of the tree-processing device 10 according to the figure is similar to that in the first embodiment. The differences concern mainly the construction of the second grab 17, the carriage 50, and the positioning device 28. In addition, this embodiment also includes debarking elements 119. As the figure shows, the second grab 17 is further attached to the carriage 50. There are two operating devices 96 intended to move the carriage 50, ) which are located on either side of the carriage 50. The operating devices are preferably hydraulic cylinders according to the figures. The structure of the second grab 17 has been altered to be such that the movement opening and closing the second grab 17 takes place in the horizontal plane in the operating position of the tree-processing device, around a vertical shaft 124. Figure 8 also shows the adjustment openings 127 of the suspension, with the aid of which the suspension points of the tree-processing device can be changed, in order to alter the point of equilibrium. There can also be adjustment openings for the carriage 50, with the aid of which it is possible to limit how far the carriage 50 moves from the cutting device 16. In other words, the adjustment openings are used to set the length of the billet being cut, i.e. as length adjustment of the billet.

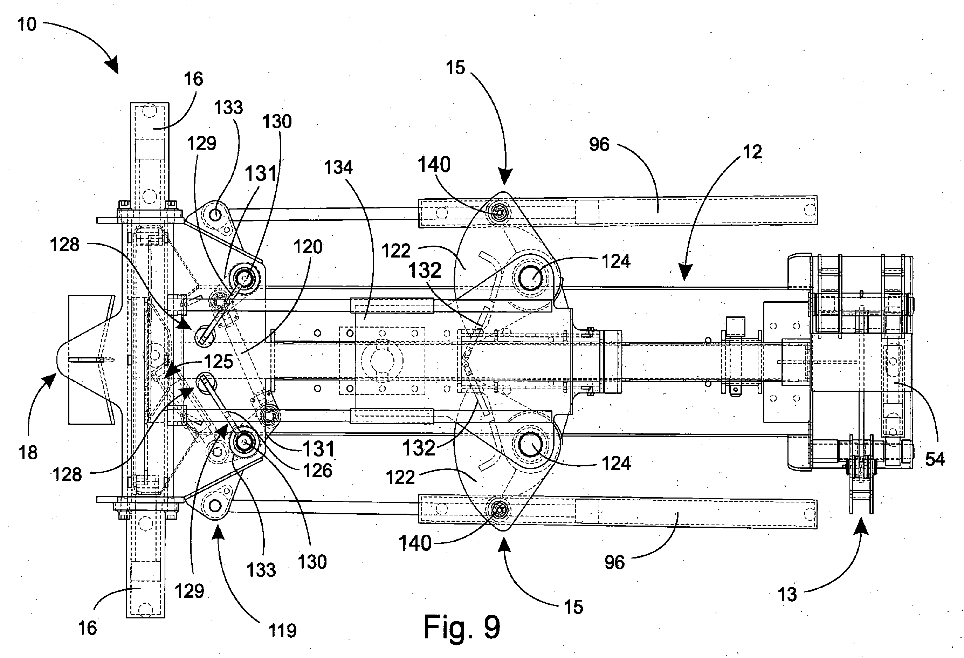

According to Figures 8 and 9, the jaws of the second grab are each formed of two eccentric arms 122 with the shape of a sector of a circle, which are preferably plate-like components located at a distance to each other parallel to and overlapping each other. The eccentric arms 122 are pivoted on shafts 124 in connection with the frame 12, perpendicular to the direction of travel of the tree 100 and the cutting direction of the cutting device 16. In this connection, the eccentric arms 122 act as eccentrics. Between the eccentric arms 122 is a grip plate 132 perpendicular to the eccentric arms 122, which forms a surface gripping the tree. The attachment of the individual jaws of the second grab 17 preferably takes place with the aid of the shaft 124. Relative to the eccentric arms 122, the shaft 124 is at the corner of the circle-sector shape of the eccentric arm 122 and the operating device 96 operating the second grab 17 are pivoted between the eccentric arms 122 in the angle between the curve of the sector and the radius of the sector, eccentrically with the aid of pivots 140. Thus, the operating devices 96 operate the eccentric arm 122 from an extension of the eccentric arm 122 relative to the grip plate 132 relative to the shaft 124, turning the eccentric arms 122. From its open position, the eccentric arm 122 of the second grab 17 rotates around the shaft 124, until the grip plate 132 comes into contact with the surface of the tree 100. When the eccentric arm 122 can no longer rotate, the movement of the operating devices 96 causes the carriage 50 to move, which with the aid of the second grab 17 pushes the tree towards the splitting device 18. In turn, the movement of the operating devices 96 in the opposite direction causes the second grab 17 to open, after which the carriage 50 and the second grab 17 move backwards while the tree remains in place.

Figure 9 also shows the construction of the debarking elements 119. The debarking elements 119 are preferably located before the cutting device 16. In this embodiment, the debarking elements 119 are planar pieces 126, which have two ends 128 and 129. The debarking elements 119 are pivoted at one end 128 to the frame 12 with the aid of shafts 130 and arranged at the other end 129 to come into contact with the tree 100 in order to perform debarking. Rotating arms 131, between which is an adjustable turnbuckle 120, are also pivoted to the shafts 130. The second rotating arm 131 also preferably includes an extension 133, to which is pivoted an operating device 125, which is, in turn, pivoted at its other end to the frame 12. With the aid of the operating device, it is possible to rotate the shafts 130 of both the planar pieces 126 by transmission of the turnbuckle 120 and thus operate the debarking elements. In the embodiment of Figures 8 and 9, a splitting device positioning system is not shown in the tree-processing device, but the second embodiment too of the invention can include such a positioning system.

The debarking elements 119 are intended to remove the bark of the tree, i.e. to strip off the bark from at least a specific area of the side of the tree, so that the tree will dry more rapidly. Because the planar pieces 126, i.e. the debarking blades, of the debarking elements 119 slant at an angle relative to the tree towards the cutting device 16, the planar pieces 126 also prevent the tree from moving backwards when the carriage 50 and the second grab 17 are moved backwards, as well as during the operating of the cutting device 16. At the same time, the debarking elements 119 also centre the tree relative to the splitting device 18.

According to Figures 8 and 9, the tree-processing device 10 according to the second embodiment of the invention includes, in addition, a bottom plate 134 attached under the carriage 50. The task of the bottom plate 134 is to hold the tree within the reach of the second grab 17 even when splitting and cutting the end part of the tree. The second grab then moves backwards away from the cutting device 16, when finally the end of the tree comes away from between the second grab 17. The bottom plate 134 then supports the end of the tree from underneath and prevents the end of the tree from dropping downwards. The bottom plate 134 is attached to the carriage, so that the bark to be removed from the tree can drop away and not remain on top of the bottom plate 134.

In the tree-processing device 10 according to the second embodiment of the invention according to Figures 8 and 9, the second grab 17 should always be run as close as possible to the cutting device 16, so that the tree can be picked up with the aid of the first grab 13 to such a height that the end of the tree can be brought in between the second grab 17. In this second embodiment, the second grab cannot be used to pick trees from a stack, instead picking must be performed with the aid of the first grab.

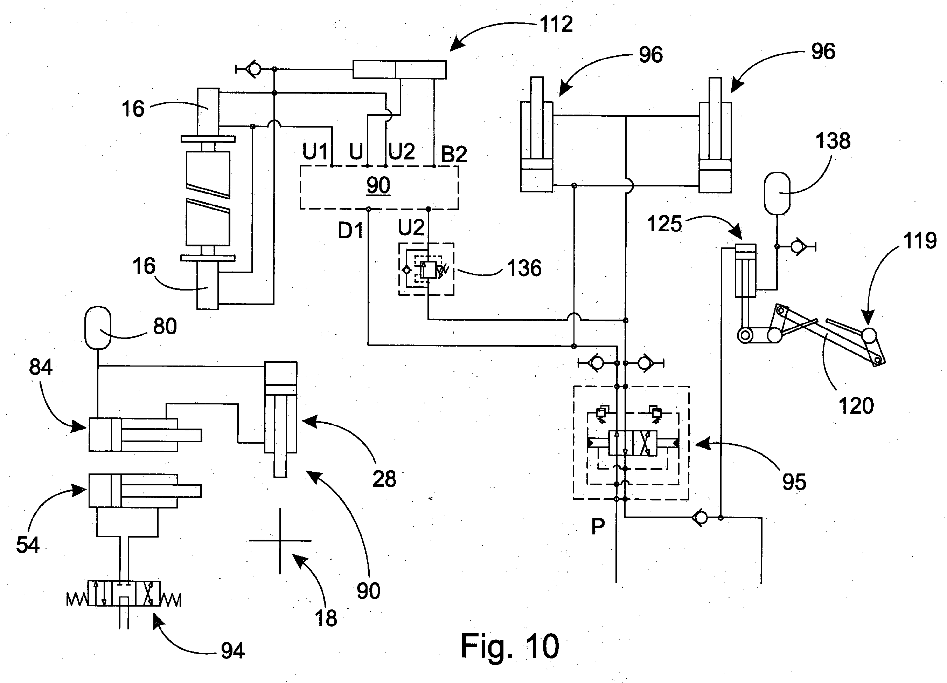

Figure 10 shows a schematic hydraulic diagram of the tree-processing device according to the second embodiment. Differing from the first embodiment of Figure 5, in this embodiment the splitting-device positioning system 28 can be made to follow the position of the operating device 54 of the first grab 13 with the aid of a duplicate cylinder 84, because the operating devices 52 operating the second grab 17 also act as operating devices for moving the carriage 50. In this embodiment, the movement of the first grab 13 is preferably implemented with the aid of only one operating device 54. According to Figure 10, the booster cylinder 112 can be used only to operate the cutting device, as the tree is fed to the splitting device with the aid of two cylinders, so that it is unnecessary to boost the pressure for this purpose.

The cylinder acting as the operating device 125 of the debarking elements 119 is preferably operated with the aid of a hydraulic accumulator 138. Pressure is arranged in the hydraulic accumulator with the aid of a feed line, after which the hydraulic accumulator presses the planar debarking pieces 126 against the tree. The operating device 125 has also a separate feed line, with the aid of which the debarking elements 119 can be opened when required.

The operating devices 52 moving the carriage of the second grab 17 feeding the tree to the splitting device and the cutting device are preferably connected in parallel, in such a way that, only after the operating devices 52 have moved over their stroke does the priority valve 136 direct the flow to the hydraulic circuit 90. The hydraulic circuit 90 controls the operation of the cutting device 16. This seeks to ensure that the cutting device 16 and the operating devices 96 of the carriage intended for feeding the tree operate only alternately relative to cutting and splitting. The pressure-sensitive valve 95 changes the direction of the operating devices 52, when the pressure in the line increases as the piston moves.

The tree-processing device according to the invention can be manufactured from stainless steel or a corresponding sufficiently strong material that will withstand varying weather conditions. By means of the use of an annular-structure frame and a booster cylinder, the frame and structures of the operating devices can be lightened, so that the total weight of the tree-processing device can be 200 - 300 kg, if the diameter of the trees to be chopped is ≤ 25 cm. The light weight of the tree-processing device also permits it to be used suspended from a small loader or corresponding implement used on farms. In addition, the tree-processing device according to the invention is economical to manufacture, as it has only a few moving parts. The tree-processing device can have a length of less than 1.5 m, so that it will also be easy to transport from one place to another. In general, the dimensions of the tree-processing device can vary according to its purpose, but the tree-processing device is preferably used for trees with a diameter of less than 30 cm. The tree-processing device is preferably used for making billets from fibre and commercial timber.

## Claims

1. Tree-processing device for making firewood, which includes,
- a frame (12),
- at least one grab (14), arranged to move over at least part of the length of the said frame (12), for moving trees (100),
- a cutting device (16) for cutting trees (100),
- a splitting device (18) for splitting trees (100),
- support means (20) for supporting the frame (12) against the ground, and
- suspension means (22) for suspending the tree-processing device from the boom of a work machine,
**characterized in that** said cutting device (16) is a double-bladed guillotine (82), said guillotine (82) including two separate guillotine blades (80), and the said guillotine blades (80) are both arranged to move against each other in a plane perpendicular to the longitudinal direction of the frame (12), until the guillotine blades (80) partly overlap each other.

2. Tree-processing device according to Claim 1, **characterized in that** the tree-processing device (10) includes at least two grabs (14), of which the first grab (13) is fixed and the second grab (17) moves, which said grabs (14) are arranged to mutually alternate at least partly between an open and a closed position, in order to feed the tree (100) to the cutting device (16) and the splitting device (18).

3. Tree-processing device according to Claim 1 or 2, **characterized in that** the tree-processing device (10) includes debarking elements (119) to break the bark of the tree (100).

4. Tree-processing device according to Claim 3, **characterized in that** the said debarking elements (119) are planar pieces (126), which have two ends (128, 129), which debarking elements (119) are pivoted at one end (128) to the frame (12) and which debarking elements (119) are arranged at the other end (129) to come into contact with the tree (100) in order to perform debarking.

5. Tree-processing device according to any of Claims 1 - 4, **characterized in that** the tree-processing device (10) includes a positioning system for the splitting device (18) arranged to adjust the positioning of the splitting device (18) on the basis of the diameter of the tree.

6. Tree-processing device according to Claim 5, **characterized in that** the positioning system includes at least one positioning operating device (28) to position the splitting device (18) and a closed hydraulic circuit (90) between the grabs (14) and the said positioning device (28) to position the splitting device (18) on the basis of the position of the grabs (14).

7. Tree-processing device according to Claim 6, **characterized in that** the closed hydraulic circuit (90) of the said positioning system further includes a hydraulic accumulator (88) for permitting a flexing movement of the splitting device (18) during the operation of the cutting device (16).

8. Tree-processing device according to claim 2 or any of Claims 3 - 7 when dependent from claim 2, **characterized in that** the said second grab (17) includes two eccentric arms (122), which are pivoted in connection with the frame (12) on shafts (124) perpendicular to the direction of travel of the tree (100) and the cutting direction of the cutting device (16).

9. Tree-processing device according to any of Claims 1 - 8, **characterized in that** the tree-processing device (10) includes a compressed-medium system (15), which includes 30
- a compressed-medium source (102),
- a double-acting operating cylinder (104), which includes a feed line (106) and a return line (107),
- a directional-control valve (108) for controlling the operating cylinder (104),
- compressed-medium conductors (109) connected from the compressed-medium source (102) through the directional-control valve (108) to the operating cylinder (104) and back again,
- a pressure-booster cylinder (112), which is fitted between the directional-control valve (108) and the operating cylinder (104),
- a control element (116) fitted between the directional-control valve (108) and the pressure-booster cylinder (112) for leading the pressure medium to the booster cylinder (112) and from there to the operating cylinder (104), in order to increase the operating force of the operating cylinder (104), and
- a rapid-feed valve (110), which is arranged between the directional-control valve (108) and the operating cylinder (104) to re-circulate the pressure medium from the operating cylinder's (104) return line (107) to the feed line (106), in order to increase the work speed of the operating cylinder (104) in such a way that together with the control element (116) and the booster cylinder (112) three velocity and force ranges (P1, P2, P3) are created in the compressed-medium system.

10. Tree-processing device according to Claim 9, **characterized in that** the said tree-processing device (10) includes a directional-control valve (92) for operating the compressed-medium system (15) as well as for both moving the grabs (14) in the frame (12) when splitting the tree (100) and for operating the cutting device (16).

11. Tree-processing device according to claim 2 or any claim dependent thereto, **characterized in that** the tree-processing device (10) includes a priority valve (136) for directing pressure alternately to the operation of the second grab (17) and the cutting device (16).

12. Tree-processing device according to claim 2 or any claim dependent thereto, **characterized in that** the tree-processing device (10) includes at least one operating device (96), which is arranged both to move the said second grab (17) in the frame (12) and to create a compressing movement against the tree (100).

## Patentansprüche

1. Ein Baumverarbeitungsgerät zur Herstellung von Feuerholz, das Folgendes umfasst:
- einen Rahmen (12),
- mindestens einen Greifer (14)zum Bewegen von Baumstämmen (100), der so angebracht ist, dass er sich über mindestens einen Teil des genannten Rahmens (12) hinweg bewegt,
- eine Schneidvorrichtung(16) für das Zersägen von Bäumen (100),
- ein Spaltwerkzeug (18) für das Spalten von Bäumen (100),
- eine Stützhalterung (20) zum Abstützen des Rahmens (12) am Boden und
- eine Aufhängevorrichtung (22), um das Baumverarbeitungsgerät am Ausleger einer Arbeitsmaschine hängend anzubringen,
**dadurch gekennzeichnet, dass** die genannte Schneidvorrichtung (16) über eine doppelschneidige Guillotine (82) verfügt, wobei diese Guillotine (82) zwei unabhängige Guillotine-Klingen (80) besitzt, und diese Guillotine-Klingen (80) beide so angeordnet sind, dass sie sich gegeneinander auf einer Ebene bewegen, die senkrecht zur Längsrichtung des Rahmens (12) ausgerichtet ist, bis die Guillotine-Klingen (80) sich teilweise überlappen.

2. Ein Baumverarbeitungsgerät nach Anspruch 1, **dadurch gekennzeichnet, dass** das Baumverarbeitungsgerät (10) über mindestens zwei Greifer (14) verfügt, wobei der erste Greifer (13) fest angebracht ist und der zweite Greifer (17) sich bewegt, und wobei die genannten Greifer (14) so angeordnet sind, dass sie jeweils gegenseitig mindestens teilweise zwischen einer offenen und geschlossenen Position abwechseln, um den Baumstamm (100) in das Schneidgerät (16) und das Spaltgerät (18) einzuführen.

3. Ein Baumverarbeitungsgerät nach Anspruch 1 oder 2, **dadurch gekennzeichnet, dass** das Baumverarbeitungsgerät (10) über Entrindungselemente (119) verfügt, um die Rinde vom Baum (100) zu lösen.

4. Ein Baumverarbeitungsgerät nach Anspruch 3, **dadurch gekennzeichnet, dass** die genannten Entrindungselemente (119) aus flachen Stücken (126) bestehen, die zwei Enden haben (128, 129), wobei die Entrindungselemente (119) an einem Ende (128) zum Rahmen (12) geschwenkt werden und wobei die Entrindungselemente (119) so am anderen Ende (129) angeordnet sind, dass sie mit dem Baum (100) in Kontakt kommen, damit die Entfernung der Rinde stattfinden kann.

5. Ein Baumverarbeitungsgerät nach einem der Ansprüche 1 - 4, **dadurch gekennzeichnet, dass** das Baumverarbeitungsgerät (10) über ein Positionierungssystem für das Spaltgerät (18) verfügt, das so angebracht ist, dass die Positionierung des Spaltgerätes (18) auf der Grundlage des Baumdurchmessers angepasst werden kann.

6. Ein Baumverarbeitungsgerät nach Anspruch 5, **dadurch gekennzeichnet, dass** das Positionierungssystem über mindestens ein Positionierungsbetriebsgerät (28) verfügt, um das Spaltgerät (18) zu positionieren, sowie über einen geschlossenen Hydraulikkreislauf (90) zwischen den Greifern (14) und diesem Positionierungsgerät (28), um das Spaltgerät (18) auf der Grundlage der Greiferposition (14) zu positionieren.

7. Ein Baumverarbeitungsgerät nach Anspruch 6, **dadurch gekennzeichnet, dass** in den geschlossenen Hydraulikkreislauf (90) dieses Positionierungssystems weiterhin ein hydraulischer Akkumulator (88) eingefügt ist, der eine Biegebewegung des Spaltgerätes (18) während des Einsatzes des Schneidgerätes (16) ermöglicht.

8. Ein Baumverarbeitungsgerät nach Anspruch 2 oder den Ansprüchen 3 - 7, soweit abhängig von Anspruch 2, **dadurch gekennzeichnet, dass** dieser zweite Greifer (17) zwei exzentrische Arme (122) aufweist, die in Verbindung mit dem Rahmen (12) auf Wellen (124) senkrecht zur Bewegungsrichtung des Baumes (100) und der Schnittrichtung des Schneidegerätes (16) geschwenkt werden.

9. Ein Baumverarbeitungsgerät nach einem der Ansprüche 1 - 8, **dadurch gekennzeichnet, dass** das Baumverarbeitungsgerät (10) über ein System mit einem komprimierten Medium (15) verfügt, das besteht aus:
- einer Quelle für das komprimierte Medium (102),
- einem doppeltwirkenden Zylinder (104), der eine Zufuhrleitung (106) und eine Rückleitung (107) aufweist,
- ein Richtungssteuerungsventil (108) zur Steuerung des Arbeitszylinders (104),
- Leiter für das komprimierte Medium (109), die von der Quelle des komprimierten Mediums (102) durch das Richtungssteuerungsventil (108) zum Arbeitszylinder (104) und zurück führen,
- ein Druckerhöhungszylinder (112), der zwischen das Richtungssteuerungsventil (108) und den Arbeitszylinder (104) eingefügt wird,
- ein Kontrollelement (116), das zwischen das Richtungssteuerungsventil (108) und den Druckerhöhungszylinder (112) eingefügt wird, um das Druckmedium zum Druckerhöhungszylinder (112) und von dort zum Arbeitszylinder (104) zu führen, um die Arbeitskraft des Arbeitszylinders (104) zu erhöhen, und
- ein Schnellspeiseventil (110), das zwischen dem Richtungssteuerungsventil (108) und dem Arbeitszylinder (104) eingefügt wird, um das Druckmedium über die Rückleitung (107) des Arbeitszylinders (104) wieder in die Zulaufleitung (106) einzuführen, damit die Arbeitsgeschwindigkeit des Arbeitszylinders (104) so erhöht wird, dass gemeinsam mit dem Steuerungselement (116) und dem Druckerhöhungszylinder (112) drei Geschwindigkeits- und Kraftbereiche (P1, P2, P3) in dem System komprimierter Medien entstehen.

10. Ein Baumverarbeitungsgerät nach Anspruch 9, das sich **dadurch gekennzeichnet, dass** dieses Baumverarbeitungsgerät (10) über ein Richtungssteuerungsventil (92) verfügt, um das System komprimierter Medien (15) zu bedienen und auch die Greifer (14) im Rahmen (12) beim Spalten der Bäume (100) und dem Betrieb des Schneidgerätes (16) zu bewegen.

11. Ein Baumverarbeitungsgerät nach Anspruch 2 oder einem davon abhängigen Anspruch, **dadurch gekennzeichnet, dass** das Baumverarbeitungsgerät (10) über ein Prioritätsventil (136) verfügt, um den Druck abwechselnd auf den Betrieb des zweiten Geifers (17) und des Schneidgerätes (16) zu richten.

12. Ein Baumverarbeitungsgerät nach Anspruch 2 oder einem davon abhängigen Anspruch, **dadurch gekennzeichnet, dass** das Baumverarbeitungsgerät (10) über mindestens ein Arbeitsgerät (96) verfügt, das sowohl so angebracht ist, dass es den zweiten Greifer (17) im Rahmen (12) bewegt als auch eine komprimierende Bewegung gegen den Baum (100) ausführt.

## Revendications

1. Dispositif de traitement des arbres pour fabriquer du bois de chauffage, comprenant:
- un châssis (12),
- au moins un grappin (14), agencé de manière à s'écarter d'au moins une partie de la longueur dudit châssis (12), pour déplacer des arbres (100),
- un dispositif de coupe (16) pour abattre des arbres ) (100),
- un dispositif de fente (18) pour fendre des arbres (100),
- des moyens de support (20) pour supporter le châssis (12) fixés au sol, et
- des moyens de suspension (22) pour suspendre le dispositif de traitement des arbres au bras d'une machine à bois,
**caractérisé en ce que** ledit dispositif de coupe (16) est une guillotine à double tranchant (82), ladite guillotine (82) comprenant deux lames guillotines distinctes (80), et lesdites ) lames guillotines (80) sont toutes deux agencées de manière à venir l'une contre l'autre dans un plan perpendiculaire par rapport à la direction longitudinale du châssis (12), jusqu'à ce que les lames guillotines (80) se chevauchent en partie.

2. Dispositif de traitement des arbres conformément à la revendication 1, **caractérisé en ce que** le dispositif de traitement des arbres (10) comprend au moins deux grappins (14), dont le premier (13) est fixe et le second (17) est mobile, lesquels grappins (14) sont agencés pour alterner mutuellement et au moins en partie entre une position ouverte et une position fermée, afin d'amener l'arbre (100) jusqu'au dispositif de coupe (16) et au dispositif de fente (18).

3. Dispositif de traitement des arbres conformément à la revendication 1 ou 2, **caractérisé en ce que** le dispositif de traitement des arbres (10) comprend des éléments d'écorçage (119) pour casser l'écorce de l'arbre (100).

4. Dispositif de traitement des arbres conformément à la revendication 3, **caractérisé en ce que** lesdits éléments d'écorçage (119) sont des pièces planaires (126), qui présentent deux extrémités (128, 129), lesquels éléments d'écorçage (119) sont pivotés à une extrémité (128) vers le châssis (12) et lesquels éléments d'écorçage (119) sont agencés à l'autre extrémité (129) de manière à venir en contact avec l'arbre (100) afin de procéder à l'écorçage.

5. Dispositif de traitement des arbres conformément à l'une des revendications 1 à 4, **caractérisé en ce que** le dispositif de traitement des arbres (10) comprend un système de positionnement pour le dispositif de fente (18) agencé de manière à ajuster le positionnement du dispositif de fente (18) en fonction du diamètre de l'arbre.

6. Dispositif de traitement des arbres conformément à la revendication 5, **caractérisé en ce que** le système de positionnement comprend au moins un dispositif de commande de positionnement (28) pour positionner le dispositif de fente (18), ainsi qu'un circuit hydraulique fermé (90) entre les grappins (14) et ledit dispositif de positionnement (28) pour positionner le dispositif de fente (18) en fonction de la position des grappins (14).

7. Dispositif de traitement des arbres conformément à la revendication 6, **caractérisé en ce que** le circuit hydraulique fermé (90) dudit système de positionnement comprend également un accumulateur hydraulique (88) permettant un mouvement de flexion du dispositif de fente (18) pendant le fonctionnement du dispositif de coupe (16).

8. Dispositif de traitement des arbres conformément à la revendication 2 ou, lorsqu'elle est dépendante de la revendication 2, conformément à l'une des revendications 3 à 7, **caractérisé en ce que** ledit second grappin (17) comprend deux bras excentriques (122), lesquels sont pivotés par rapport au châssis (12) sur des axes (124) perpendiculaires à la direction de déplacement de l'arbre (100) et à la direction de découpe du dispositif de coupe (16).

9. Dispositif de traitement des arbres conformément à l'une des revendications 1 à 8, **caractérisé en ce que** le dispositif de traitement des arbres (10) comprend un système à fluide de pression (15), comprenant:
- une source de fluide de pression (102),
- un cylindre de commande à double effet (104), comprenant une conduite d'alimentation (106) et une conduite de retour (107),
- une vanne de distribution (108) pour contrôler le cylindre de commande (104),
- des conducteurs de fluide de pression (109) connectés depuis la source de fluide de pression (102) jusqu'à la vanne de distribution (108) au cylindre de commande (104) et dans le sens inverse,
- un cylindre surpresseur (112), lequel est engagé entre la vanne de distribution (108) et le cylindre de commande (104),
- un élément de contrôle (116) engagé entre la vanne de distribution (108) et le cylindre surpresseur (112) pour amener le fluide de pression vers le cylindre surpresseur (112), puis vers le cylindre de commande (104), afin d'augmenter la force de fonctionnement du cylindre de commande (104), et
- une vanne d'alimentation rapide (110), laquelle est agencée entre la vanne de distribution (108) et le cylindre de commande (104) de manière à faire à nouveau circuler le fluide de pression depuis la conduite de retour (107) du cylindre de commande (104) jusqu'à la conduite d'alimentation (106), afin d'augmenter la vitesse de fonctionnement du cylindre de commande (104) de sorte que, avec l'élément de contrôle (116) et le cylindre surpresseur (112), trois plages de vitesse et de force (P1, P2, P3) soient créées dans le système à fluide de pression.

10. Dispositif de traitement des arbres conformément à la revendication 9, **caractérisé en ce que** ledit dispositif de traitement des arbres (10) comprend une vanne de distribution (92) pour faire fonctionner le système à fluide de pression (15), ainsi que pour déplacer les grappins (14) dans le châssis (12) lors de la fente de l'arbre (100) et faire fonctionner le dispositif de coupe (16).

11. Dispositif de traitement des arbres conformément à la revendication 2 ou l'une des revendications qui en dépendent, **caractérisé en ce que** le dispositif de traitement des arbres (10) comprend une soupape de priorité (136) pour diriger la pression en alternance vers le second grappin (17) et vers le dispositif de coupe (16).

12. Dispositif de traitement des arbres conformément à la revendication 2 ou l'une des revendications qui en dépendent, **caractérisé en ce que** le dispositif de traitement des arbres (10) comprend au moins un dispositif de commande (96), lequel est agencé pour déplacer ledit second grappin (17) dans le châssis (12) et créer un mouvement de compression contre l'arbre (100).
